(19) **Europäisches Patentamt**

**European Patent Office**

**Office européen des brevets**

(11) **EP 0 857 948 B1**

(12) **EUROPÄISCHE PATENTSCHRIFT**

(45) Veröffentlichungstag und Bekanntmachung des Hinweises auf die Patenterteilung:
**16.04.2003 Patentblatt 2003/16**

(51) Int Cl.⁷: **G01D 3/02**

(21) Anmeldenummer: **98101797.3**

(22) Anmeldetag: **03.02.1998**

(54) **Verfahren zur Ausgleichung von Messwerten**

Process for compensating measured values

Procédé pour la compensation de valeurs mesurées

(84) Benannte Vertragsstaaten:
**CH DE DK FR GB IT LI SE**

(30) Priorität: **07.02.1997 DE 19704582**

(43) Veröffentlichungstag der Anmeldung:
**12.08.1998 Patentblatt 1998/33**

(73) Patentinhaber: **Rollei Fototechnic GmbH**
**38126 Braunschweig (DE)**

(72) Erfinder: **Kampmann, Georg, Dr.-Ing.**
**52531 Übach-Palenberg (DE)**

(74) Vertreter: **Lins, Edgar, Dipl.-Phys. Dr.jur. et al**
**GRAMM, LINS & PARTNER**
**Theodor-Heuss-Strasse 1**
**38122 Braunschweig (DE)**

(56) Entgegenhaltungen:
**EP-A- 0 720 004     DE-A- 4 100 501**

**Beschreibung**

Die Erfindung betrifft ein Verfahren zur Ausgleichung von durch überbestimmte, in einer Matrix **A** zusammengefaßten Koeffizienten von Bestimmungsgleichungen definierten Systemen, nämlich zur Bestimmung eines Meßwerts aus einer solchen Vielzahl von Messungen, die die Anzahl der zu bestimmenden Unbekannten des Meßwerts überschreitet, oder zur Bestimmung einer definierten statischen Verteilung eines über Knoten miteinander verknüpften Streckennetzes, insbesondere Stabtragwerk.

Ausgleichungsprobleme stellen sich in der Technik insbesondere bei der Durchführung von Messungen und bei der Analyse von über bestimmten Systemen, bei denen an einem Ort mehrere Einflüsse wirksam werden. In einer verallgemeinerten Betrachtungsweise lassen sich diese Systeme regelmäßig auf Streckennetzwerke zurückführen, bei denen Strecken über Knoten miteinander verbunden werden.

Bei der Bestimmung einer Ortskoordinate im Raum werden beispielsweise durch Messungen Strecken bestimmt, die von definierten Beobachtungspunkten zu der zu bestimmenden Ortskoordinate verlaufen. Die Messungen sind fehlerbehaftet, so daß in diesem Fall zur Bestimmung der Lage des Knotens die Länge der Strecken durch Ausgleichung variierbar ist, um den Knoten, also die Ortskoordinaten, mit einem minimalen Fehler zu bestimmen.

In Stabtragwerken hingegen sind die Längen der Strecken und die Positionen der Knoten durch die Länge der Stäbe primär definiert. Von Interesse kann insbesondere die statische Belastung der einzelnen Knoten durch die Einwirkungen der verschiedenen Stäbe und die von den Stäben aufzunehmenden Spannungen sein. Durch Ausgleichungsrechnung kann versucht werden, die statische Belastung der Stäbe zu vergleichmäßigen, um Schwachpunkte der Konstruktion auszumerzen.

Zur Durchführung der Ausgleichungsrechnungen ist eine ganze Reihe von unterschiedlichen Verfahren entwickelt worden. Das am häufigsten angewendete Ausgleichungsverfahren ist die Methode der kleinsten Quadrate, bei der die Summe der quadratischen Abweichungen der einzelnen Werte von den ausgeglichenen Werten minimiert wird. Dieses Ausgleichungsverfahren ist auch deshalb besonders wichtig, weil es zur iterativen Approximierung anderer Schätzverfahren geeignet ist. Dieses Verfahren wird auch als L2-Approximation bezeichnet.

Ein besonders Problem der Ausgleichungsverfahren liegt in der Erkennung von Ausreißern, also von Meßfehlern, die ggfs. zu einer erheblichen Verfälschung des Ausgleichungsergebnisses führen können. Die bekannte Ll-Approximation, bei der lediglich die Absolutsumme der Abweichungen (ohne Quadrierung) minimiert wird, ist gegen Ausreißer relativ resistent.

Diese seit Jahrzehnten angewendeten Ausgleichungsverfahren sind von der Fachwelt als optimiert angesehen worden. In rein mathematischen Überlegungen ist das theoretische Modell einer balancierten Ausgleichung erörtert worden, durch die unterschiedlichen Gewichten der auszugleichenden Werte Rechnung getragen werden soll. Eine Handhabung des mathematischen Modells für praktische Anwendungsfälle hat sich hieraus jedoch bisher nicht ergeben.

Die Erfindung geht daher von der allgemeinen Problemstellung aus, durch ein Ausgleichungsverfahren der eingangs erwähnten Art die Bestimmung von Meßwerten hinsichtlich ihrer Genauigkeit zu verbessern oder die Dimensionierung von Streckennetzen zu optimieren.

Ausgehend von dieser Problemstellung werden zur Durchführung des Verfahrens der eingangs erwähnten Art erfindungsgemäß folgende Verfahrensschritte angewendet:

a) Die Bestimmungsgleichungen werden auf paarweise lineare Abhängigkeiten voneinander untersucht,

b) Das Maß der Überbestimmung (Nettofreiheitsgrad) wird unter Berücksichtigung des Rangdefekts r, der Matrix **A**, der Anzahl der zu bestimmenden Unbekannten u und der Anzahl n der Bestimmungsgleichungen unter Berücksichtigung von festgestellten paarweisen linearen Abhängigkeiten festgestellt,

c) Feststellung von Totalredundanzen und nicht überbestimmten Bedingungsgleichungen (Nichtredundanzen),

d) Erkennung von etwaigen latenten und verkettet latenten Bedingungen,

e) Durchführung einer balancierten Ausgleichung in dem linearen Modell **A x** = **1** + **v**. Durch Vereinheitlichung der Werte der Hauptdiagonalen der Matrix

$$B = [A \, (A^T \, P_G \, A)^{-1} \, A^T \, P_G]$$

mit $\mathbf{P}_G$ als Matrix der Balancierungsfaktoren nach Festlegung des Balancierungsziels unter Berücksichtigung etwaiger festgestellter paarweiser linearen Abhängigkeiten, des Netto-Freiheitsgrades, etwaiger Total- oder Nichtredundanzen und etwaiger latenter oder verkettet latenter Bedingungen.

In den Fällen, in denen die Gefahr besteht, daß voneinander unabhängige Ausgleichungsprobleme vorliegen, ist es erforderlich, vor dem Verfahrensschritt a) voneinander unabhängige Ausgleichungsprobleme festzustellen und separat voneinander zu behandeln.

Die erfindungsgemäßen Verfahrensschritte erlauben erstmalig die Anwendung des theoretischen Modells der balancierten Ausgleichung auf technische Systeme, da in den Verfahrensschritten a) bis d) und ggfs. in der Feststellung von voneinander unabhängigen Ausgleichungsproblemen alle Fehlerquellen eliminiert werden, die die Durchführung der balancierten Ausgleichung fehlerhaft werden ließen.

Die Anwendung der erfindungsgemäßen balancierten Ausgleichung führt zu erheblich verbesserten Genauigkeiten der Bestimmung der Ortskoordinaten, beispielsweise von Roboterarmen, der Bestimmungen der Parameter für das räumliche Vorwärtseinschneiden in der Photogrammetrie und für die Auslegung von Stabtragwerken als Spezialfall eines Streckennetzes. Die erfindungsgemäße Optimierung läßt sich daher auch bei elektrischen Netzen, netzartigen Strukturen im Verkehrswesen, bei allen als Stabtragwerke auffaßbaren Tragekonstruktionen und Strukturen sowie bei nahezu allen Meßverfahren einsetzen.

Ausgangspunkt ist das lineare Modell der Ausgleichung nach vermittelten Beobachtungen mit

$$A\,x = 1 + v,\ D\,(l) = \sigma^2\,P^{-1}$$

worin 1 einen (n, 1) Vektor von (reduzierten) Beobachtungen, **A** eine (n, u) Matrix fester Koeffizienten, **x** einen (n, u) Vektor fester, unbekannter Parameter und **v** einen (n, 1) Vektor zufälliger Fehler bezeichnet, wobei die **v** als normalverteilt angenommen werden sollen, mit $v \sim N\,(O,\ \sigma^2\,E)$. Die Matrix **E** bezeichnet die Einheitsmatrix der betreffenden Dimension, n die Anzahl der Beobachtungen und u die Anzahl der unbekannten, zu schätzenden Parameter **x**.

Die Matrix **A** enthält somit die Koeffizienten der Bestimmungsgleichungen, mit denen beispielsweise eine Ortskoordinate aus verschiedenen Längenmessungen von definierten Ausgangskoordinaten aus bestimmt wird oder in einem Stabtragwerk auftretende Kräfte charakterisiert werden.

Für eine balancierte Ausgleichung ergibt sich als Balancierungsziel, in der Hauptdiagonale der Matrix **B**, die definiert ist als

$$B = [A\,(A^T\,P_G\,A)^{-1}\,A^T\,P_G],$$

gleich groß auszubilden, wodurch eine gleiche Verteilung der Wertigkeit und der Bedeutung einzelner Meßwerte bzw. einzelner Stäbe in einem Stabtragwerk charakterisiert werden. Dabei enthalte die (n, n) Diagonalmatrix $P_G$ die "Balancierungsfaktoren". Dieser Begriff wird bewußt in Anlehnung an die mechanische Betrachtung von Stabtragwerken gewählt.

**Einschränkung:** Für alle weiteren Betrachtungen sei: $D\,(1) = \sigma^2\,E$

In allgemeiner Form werden zur Durchführung der Erfindung die nachfolgenden Arbeitsschritte ausgeführt.

**1. Arbeitsschritt:**

Es ist festzustellen, in wie viele Teilausgleichungen die Matrix **A** zerfällt (Normalengleichungen zerfallen) und das Ausgangsproblem ggfs. zu unterteilen ist.

**Beispiel:** Dabei zerfällt das Gleichungssystem in zwei voneinander unabhängige Gruppen, nämlich Zeile 1-2-3 und Zeile 4-5-6.

$$A = \begin{pmatrix} 1.0 & 1.0 & 0.0 & 0.0 \\ 1.0 & 2.0 & 0.0 & 0.0 \\ 1.0 & 3.0 & 0.0 & 0.0 \\ 0.0 & 0.0 & 1.0 & 4.0 \\ 0.0 & 0.0 & 1.0 & 5.0 \\ 0.0 & 0.0 & 1.0 & 6.0 \end{pmatrix}$$

**Begründung:** Die Balancierung bezieht sich stets auf eine geschlossene Ausgleichung, bei der alle Unbekannten "miteinander verbunden" sind.

Würde man z.B. den Gewichtseinheitsfehler für das gesamte System berechnen, so entspricht das dem Effekt der Vermengung mehrerer Ausgleichungen (in dem Beispiel der Vermengung zweier unabhängiger Ausgleichungen).

Für alle weiteren Betrachtungen wird davon ausgegangen, daß die Normalgleichungen **nicht zerfallen** (keine Teilsysteme).

Numerisch (programmtechnisch) wird hier ein (n,1) int-Vektor **GRUPPE** aufgebaut, der jeder Zeile (Beobachtung) der Koeffizientenmatrix **A** die Zugehörigkeit zu einer Ausgleichungsgruppe zuweist. Hier ist aufsteigend sortiert, beginnend mit dem Wert 1.

Sind alle Parameter der Koeffizientenmatrix miteinander verbunden, so enthält der Vektor **GRUPPE** ausschließlich den Wert 1.

**2. Arbeitsschritt**

Alle Zeilen in der Koeffizientenmatrix müssen jetzt auf **"paarweise lineare Abhängigkeit"** (Mehrfachbeobachtungen) untersucht werden. Dafür werden zwei int-Vektoren bereitgestellt, in denen die folgende Information gespeichert wird:

a) (n,1)-Vektor: **ARRAY-LA**: Inhalt des Feldes 1 / 0

    1: erstmaliges Auftreten der Zeile (Beobachtung)
    0: Zeile (Beobachtung) ist linear abhängig zu einer vorangegangenen Zeile

Damit ist die Summe der Elemente von ARRAY-LA gleich der Anzahl der Beobachtungen, die keine Wiederholungsbeobachtungen sind. Diese Größe erhält die Bezeichnung
    **NETTO-N** im Vergleich zur Anzahl n der Zeilen in der Koeffizientenmatrix **A**
    **BRUTTO-N**

b) (n,1)-Vektor: **ARRAY-LA-ANZAHL**: Inhalt sind integer-Werte

Hier ist die jeweilige Wiederholungszahl aufgelistet. Diese Information ist für die Formulierung der Balancierungsberechnung ausgesprochen wichtig.

**Beispiel:**

$$A = \begin{pmatrix} 1 & 1 \\ 1 & 2 \\ 2 & 4 \\ 1 & 3 \\ 4 & 8 \\ 2 & 2 \end{pmatrix} \quad ; \quad \textbf{\textit{ARRAY-LA}} = \begin{pmatrix} 1 \\ 1 \\ 0 \\ 1 \\ 0 \\ 0 \end{pmatrix} \quad ; \quad \textbf{\textit{ARRAY-LA-ANZAHL}} = \begin{pmatrix} 2 \\ 3 \\ 3 \\ 1 \\ 3 \\ 2 \end{pmatrix} \quad ;$$

Zeile 1 und 6 sind "paarweise linear abhängig", sowie Zeilen 2, 3 und 5. Zeile 4 ist nicht "paarweise linear abhängig" zu irgendeiner anderen Zeile. Damit ist BRUTTO-N =3.

**3. Arbeitsschritt**

Es ist festzustellen, wie groß das Maß der Überbestimmung ist und ob ein Ausgleichungsproblem vorliegt. Hierfür muß neben der Anzahl der Parameter u und der Kennungen **BRUTTO-N** und **NETTO-N** noch der **Rangdefekt der Koeffizientenmatrix** bekannt sein.

Hierfür kann z.B. die Bestimmung der Eigenwerte benutzt werden. Die Anzahl der Eigenwerte, die den numerischen Wert Null annehmen, bezeichnet den Rangdefekt r in der Koeffizientenmatrix **A**.

Für die weiteren Berechnungen kann wie folgt vorgegangen werden:

a) Aufstellung einer (r,u) Matrix **E** mit der Bedingung **A E**$^T$ = **0** und Verwendung dieser Matrix bei den weiteren Berechnungen mittels Pseudoinverser.

b) Da sich Verbesserungen und damit die ausgeglichenen Beobachtungen als sogenannte **datumsinvariante Größen** darstellen, können diejenigen Spalten aus der Koeffizientenmatrix gestrichen werden, die mit den Eigenwerten = 0.0 korrespondieren.

Man erhält dann eine reduzierte Matrix **A** mit n Zeilen und (u-r) Spalten.

Bei beiden Varianten ergeben sich die gleichen Verbesserungen. Variante a) enthält die Berechnung der Pseudoinversen während Variante b) einer "Datumsvorgabe" entspricht und eine "S-Transformation" der berechneten Parameter **x** notwendig macht.

Festlegung des "Freiheitsgrades" F einer Ausgleichung:

$$\text{NETTO-F} = \text{NETTO-N} - u + r$$

$$\text{BRUTTO-F} = \text{BRUTTO-N} - u + r$$

Eine Ausgleichung (und damit eine Balancierung) ist nur dann möglich und sinnvoll, wenn der numerische Wert **NETTO-F > 0!**

Begründung zu "paarweise linear abhängigen" Zeilen in der Koeffizientenmatrix: Ausgegangen wird von der Ausgleichung vermittelnder Beobachtungen nach der Methode der kleinsten Quadrate:

a) Ohne Beschränkung der Allgemeinheit sollen zwei Zeilen in der Koeffizientenmatrix gleich groß sein und die korrespondierenden Werte im Beobachtungsvektor unterschiedliche Werte aufweisen. Dann kann man diese Zeilen als Beobachtungen interpretieren, die mehrfach, nämlich zweifach, durchgeführt worden sind.

Ohne die Ergebnisse für die Parameter x zu verändern kann man das Mittel der beiden Beobachtungswerte in die Ausgleichung einführen und nur eine der beiden Zeilen von der Koeffizientenmatrix benutzen. Man muß lediglich als "Gewicht" dieser Beobachtung den Wert 2 in die Ausgleichung einführen.

Würde man es bei der Ausgleichung bei den beiden "Mehrfachbeobachtungen" belassen, so findet eine bloße Mittelbildung statt, und zwar für die betreffenden Beobachtungen.

Sind nämlich gerade u+1 Zeilen gegeben von denen zwei paarweise linear abhängig sind (Mehrfachbeobachtungen), so ist der Ausgleichungsprozeß des gesamten Systems eine bloße Mittelbildung der beiden betreffenden Beobachtungen.

**Der Bruttofreiheitsgrad täuscht dann über diesen Sachverhalt hinweg.**

Eine Analogie besteht zur mechanischen Interpretation eines "Stabtragwerkes". Hier können Mehrfachbeobachtungen als Verstärkung (Querschnitt) eines betreffenden Stabes interpretiert werden.

Diese Interpretation gilt nur für nicht-Korrelierte Beobachtungen, d.h. **P** ist eine Diagonalmatrix.

## 4. Arbeitsschritt

Es ist besonders wichtig, zwei bestimmte (polare) Beobachtungen (Zeilen in der Koeffizientenmatrix) zu erkennen, und zwar

    a) völlig überflüssige Zeilen **(Totalredundanz)**
    b) Bedingungsgleichungen für die Parameter **(Nichtredundanz).**

Die Gruppe der Beobachtungen a) zeichnet sich dadurch aus, daß sie aus der Ausgleichung entfernt werden können, ohne daß sich die Ergebnisse für die Parameter **x** ändern. Beobachtungen der Gruppe b) zeichnen sich dadurch aus, daß sie (mindestens) einen Parameter x, -in Relation zu anderen Parametern- eindeutig festlegen. Eine Weglassung dieser Beobachtung (Zeile) würde einen Rangdefekt in der Koeffizientenmatrix verursachen.

**Für alle weiteren Betrachtungen werden nur diejenigen Zeilen in der Koeffizien tenmatrix untersucht, die im korrespondierenden Vektor ARRAY-LA eine 1 aufweisen.**

Die sich ergebende "reduzierte" Matrix mit NETTO-N Zeilen und u-r Spalten sei mit **W** bezeichnet.

Für die Festlegung dieser Beobachtungen (Totalredundanz und Nichtredundanz) wird ein weiterer Index-Vektor bereitgestellt, bei dem diese Beobachtungen gekennzeichnet werden können.

(n,1) ARRAY-REDUNDANZ: 1=Totalredundanz; 2=Nichtredundanz; 0=sonst.

**Es gilt:**

Totalredundanz der Beobachtung i: $[\,\mathbf{W}\,(\mathbf{W^T\,W}\,)^{-1}\,\mathbf{W^T}\,]_{ii} = 0$

Nichtredundanz der Beobachtung i: $[\,\mathbf{W}\,(\mathbf{W^T\,W}\,)^{-1}\,\mathbf{W^T}\,]_{ii} = 1$

Es ist programmtechnisch wichtig, die erhaltenen Werte im Vektor **ARRAY-REDUNDANZ** der Größe und der Reihenfolge der Vektoren **ARRAY-LA** und **ARRAY-LA-ANZAHL** anzugleichen.

Die Anzahl der Totalredundanzen wird **ANZ-TOTALREDUNDANZ** und die Anzahl der Nichtredundanzen wird **ANZ-BEDINGUNGEN** genannt.

**Einfluß von Totalredundanz und Nichtredundanz auf die Balancierungsrechnung:**

    a) **Totalredundanzen:** Diese Beobachtungen, zusammen mit ihren Mehrfachbeobachtungen sollen der Einfachheit halber aus der gesamten Ausgleichung herausgelassen werden. Damit reduziert sich korrespondierend der Wert **BRUTTO-N** und **NETTO-N**.
    Werden diese Beobachtungen jedoch mit in die Ausgleichung eingeführt, so muß für die Festlegung des Balancierungszieles modifiziert werden.

    -    Die Balancierungsfaktoren können auf einen beliebigen Wert vorbelegt werden, z.B. dem als Maximalwert vorgesehenen Wert.

    -    Die Werte **BRUTTO-N** und **NETTO-N** müssen um die Anzahl der totalredundanten Beobachtungen (incl. deren Mehrfachbeobachtungen) reduziert werden.

    b) **Nichtredundanzen:** Diese Beobachtungen können wie eine einfache Mittelbildungen aufgefaßt werden, falls Mehrfachbeobachtungen vorliegen.
    Betrachtet wird **eine nichtredundante Beobachtung:** Folgende Fälle können unterschieden werden.

Zum Zweck der Balancierung wird die betreffende Beobachtung einfach aus dem Datenmaterial herausgenommen und korrespondierend **BRUTTO-N** und **NETTO-N** und die Anzahl von u um eins reduziert. Nach erfolgter Balancierung der übigen Beobachtungen kann diese eine Beobachtung einfach angefügt werden. Die Matrix B (balancierte Projektion) erhält als Zielwert den numerischen Wert 1.0. Der zugehörige Balancierungsfaktor kann dann (quasi beliebig) auf den Maximalwert der übrigen Beobachtungen festgelegt werden.

**Nichtredundante Beobachtung mit korrespondierenden Mehrfachbeobachtungen:** Zum Zweck der Balancierung werden **alle** betreffende Beobachtungen einfach aus dem Datenmaterial herausgenommen und korrespondierend **BRUTTO-N** und **NETTO-N** und die Anzahl von u um eins reduziert. Nach erfolgter Balancierung der übrigen Beobachtungen werden diese Beobachtungen einfach angefügt. Sie erhalten dann die nachfolgenden Balancierungsfaktoren (Beispiel):

$$
A \; = \; \begin{pmatrix} 0.0 & 1.0 & 1.0 \\ 0.0 & 2.0 & 4.0 \\ 0.0 & 1.0 & 3.0 \\ 1.0 & 2.0 & 3.0 \\ 2.0 & 4.0 & 6.0 \end{pmatrix}
$$

Zeile 4 ist eine nichtredundante Beobachtung mit einer Mehrfachbeobachtung in Zeile 5, wobei hier (lineare Abhängigkeit) der Faktor 2 enthalten ist. Das Verhältnis der Balancierungsfaktoren der beiden Zeilen ist dann 1 zu $(\tfrac{1}{2})^2$ oder bezogen auf einen Maximalwert von 100 für den Balancierungsfaktor der vierten Zeile: 100 zu 25. Die Projektion unter Einbringung der Balancierungsfaktoren ergeben dann:

$$
A \, [ \, ( \, A^T \, P_G \, A \, )^{-1} \, A^T \, P_G \, ]_{ii} \; = \; \begin{pmatrix} 0.666666 \\ 0.666666 \\ 0.666666 \\ 0.5 \\ 0.5 \end{pmatrix} \; ; \; P_G \; = \; \begin{pmatrix} 100.0 \\ 100.0 \\ 100.0 \\ 100.0 \\ 25.0 \end{pmatrix}
$$

## 5. Arbeitsschritt

### Erkennung und Beseitigung latenter und verkettet latenter Bedingungen

Dieser Arbeitsschritt ist für das in Rede stehende Verfahren nicht von Bedeutung und kann für die Berechnung übersprungen werden. Es ist stets gewährleistet, daß unter den Modellvoraussetzungen immer mehr als zwei Nicht-Null-Elemente in einer Zeile der Koeffizientenmatrix enthalten sind.

Latente Bedingungen bei der Ausgleichung vermittelnder Beobachtungen können als einzelstehend oder als verkettet auftreten. Beide Varianten sind für die Berechnung bzw. Festlegung der Balancierungsfaktoren von besonderer Wichtigkeit. Was sind latente Beobachtungen?

**Beispiel:**

$$A = \begin{pmatrix} 1.0 & 3.0 & 4.0 \\ 1.0 & 5.0 & 6.0 \\ 0.0 & 7.0 & 8.0 \\ 0.0 & 9.0 & 1.0 \\ 0.0 & 3.0 & 2.0 \end{pmatrix} \quad ; \quad l = \begin{pmatrix} 3.0 \\ 1.0 \\ 5.0 \\ 6.0 \\ 9.0 \end{pmatrix} \quad ;$$

Ausgegangen wird von der reduzierten Matrix W, in der keine Mehrfachbeobachtungen mehr enthalten sind (paarweise lineare Abhängigkeiten). Kennzeichen latenter Bedingungen ist es, daß eine Spalte in der Koeffizientenmatrix lediglich **zwei** von Null verschiedene Elemente enthält. Diese beiden Werte seien der Einfachheit halber mit a und b benannt. Durch die Differentialprobe der vermittelnden Ausgleichung gilt für die korrespondierenden Verbesserungen der beiden Zeilen:

$$a\,v_1 + b\,v_2 = 0$$

Dies ist eine **latente Bedingung,** die sich auch auf das Verhältnis der beiden Hauptdiagonalenelemente der Projektionsmatrix $C = A\,(A^T A)^{-1}\,A^T$ übertragen läßt. In dem Beispiel sind a=1 und b=1 gleich groß gewählt. Dies ist keinerlei Einschränkung für die weiteren Darlegungen.

$$C_{ii} = \begin{pmatrix} 0.5140965 \\ 0.5140965 \\ 0.9241777 \\ 0.9777873 \\ 0.0698419 \end{pmatrix} \quad ; \quad v = \begin{pmatrix} -1.85177275 \\ +1.85177275 \\ +1.05211448 \\ +0.94831269 \\ -6.53438701 \end{pmatrix} \quad ;$$

In Kenntnis, daß die beiden ersten Zeilen Verbesserungen erzeugen, die in Ihrer (arithmetischen) Summe zu Null werden, kann eine weitere "latente Bedingung" = "latente Beobachtung" angefügt werden, welche die Unbekannten **x** und die Verbesserungen **v** nicht ändert. Sie besteht aus der Summe der ersten beiden Zeilen von **A** und **l**

$$A = \begin{pmatrix} 1.0 & 3.0 & 4.0 \\ 1.0 & 5.0 & 6.0 \\ 0.0 & 7.0 & 8.0 \\ 0.0 & 9.0 & 1.0 \\ 0.0 & 3.0 & 2.0 \\ 2.0 & 8.0 & 10.0 \end{pmatrix} \quad ; \quad l = \begin{pmatrix} 3.0 \\ 1.0 \\ 5.0 \\ 6.0 \\ 9.0 \\ 4.0 \end{pmatrix} \quad ;$$

Jedoch ändert sich für diese Matrix **A** die Matrix $C = A(A^T A)^{-1}\,A^T$, jedoch nur in den betreffenden Komponenten der Zeile 1,2 und (neuerlich) 6:

$$C_{II} = \begin{pmatrix} 0.1807632 \\ 0.1807632 \\ 0.9241777 \\ 0.9777873 \\ 0.0698419 \\ 0.6666666 \end{pmatrix} \quad ; \quad v \equiv \begin{pmatrix} -1.85177275 \\ +1.85177275 \\ +1.05211448 \\ +0.94831269 \\ -6.53438701 \\ 0.00000000 \end{pmatrix} \quad ;$$

Dieser Sachverhalt der verschwindenden Verbesserung Nummer 6 macht deutlich, daß die Beobachtungsgleichung wie eine "latente" Bedingungsgleichung für die Parameter x betrachtet werden kann, womit eine **Korrespondenz zum Arbeitsschritt 4** hergestellt ist.

Es läßt sich nun diese "Bedingungsgleichung" eliminieren, und ein reduziertes Modell erstellen. Die Behandlung "latenter Bedingungen" ist Gegenstand einer wissenschaftlichen Publikation, die sich in Vorbereitung befindet.

**Ein Weg, der numerisch keinerlei Einschränkungen aufweist, wird angegeben:**

-    Bildung der "Summenbeobachtung" als neue Zeile in **A** und **I**. (Die Anzahl dieser Summenbedingungen wird mit **ANZ_LATENT** bezeichnet). Da die beiden zu summierenden Zeilen paarweise linear unabhängig sind, ist auch die Summenzeile jeweils paarweise linear unabhängig, also keine Mehrfachbeobachtung.

Durch Hinzunahme vergrößert sich **BRUTTO-N** und **NETTO-N.** Ausgehend von diesen Daten kann dann die Balancierung vorgenommen werden. Nach Festlegung der Faktoren kann dann mit dem um die latenten Beobachtungen gekürzten Modell gearbeitet werden.

Die Ergebnisse für die Balancierungsfaktoren der ursprünglichen Beobachtungen sind identisch zu denen im Modell der "eliminierten Bedingungsgleichung".

Liegen verkettete latente Bedingungen vor, so können sie sukzessive nach dem dargelegten Verfahren abgearbeitet werden.

### 6. Arbeitsschritt

**Festlegung des Balancierungszieles:**

Unter Verwendung der Arbeitsschritte 1-5 kann sich das "balancierte" Diagonalenelement $b_{ii}$ der (n,n) Matrix **B**

$$b_{ii} = [A(A^T P_G A)^{-1} A^T P_G]$$

darstellen zu:

$$b_{ii} = \frac{(u - r)}{(\text{NETTO-N} \cdot LA_i)}$$

u = Anzahl der Unbekannten
r = Rangdefekt
**NETTO-N** = siehe Arbeitsschritte 1-5
$LA_i$ = Korrespondierender Wert im Vektor **ARRAY-LA-ANZAHL**

Insbesondere bei Verwendung von Iterationsalgorithmen ist es von besonderer Bedeutung, das Iterationsziel $b_{ii}$ a priori zu kennen.

Um die Ausgleichung zu kennzeichnen, sind die folgenden numerischen Größen von Wichtigkeit:

- Anzahl der Nicht-Null-Elemente (keine Wiederholungsbeobachtungen) je Spalte in der Koeffizientenmatrix **A**
- **NETTO-N / BRUTTO-N**
- Rangdefekt r / Anzahl Parameter u
- **NETTO-F**
- **ANZ-TOTALREDUNDANZ / AHZ-BEDINGUNGEN / ANZ-LATENT**

Zur Kennzeichnung wird weiterhin der Begriff der Bedingungsdichte B verwendet, der sich aus

$$B = \frac{\text{NETTO-N - (u-r-ANZ-BEDINGUNGEN-ANZ-TOTALREDUNDANZ)}}{\text{(u-r-ANZ-BEDINGUNGEN-ANZ-TOTALREDUNDANZ)}}$$

ergibt. Hier wird das Verhältnis der Überbestimmung der Parameter **x** verdeutlicht als globale Größe. Um eine lokale Bestimmung für die Parameter zu erhalten, kann B (für jedes $x_i$) multipliziert werden mit der Anzahl der (paarweise linear unabhängigen) Nicht-Null-Elemente in der Koeffizientenmatrix.

**Schlußbemerkungen:** Wird im Modell der vermittelnden Ausgleichung nach (1) gearbeitet, so ist die Matrix $P_G$ der Balancierungsfaktoren mit der Matrix **P** zu multiplizieren. Für einen allerdings häufig auftretenden Spezialfall, bei dem n = u + 1 ist soll die Ausgleichungsrechnung gemäß dem letzten Arbeitsschritt anhand eines einfachen numerischen Beispiels erläutert werden.

Das Ausgangsgleichungssystem

$$\mathbf{A} \, x = l + v \quad \text{sei} \qquad A = \begin{pmatrix} 1 & 1 \\ 1 & 2 \\ 1 & 8 \end{pmatrix} \; ; \; l = \begin{pmatrix} 1 \\ 2 \\ 4 \end{pmatrix} \; ; \; x = \begin{pmatrix} x_1 \\ x_2 \end{pmatrix} \; ; \; v = \begin{pmatrix} v_1 \\ v_2 \\ v_3 \end{pmatrix} \; ;$$

Durch eine einfache Umformung ergibt sich,

$$-E \, v + A \, x = l \text{ mit } E = (n, n) \text{ Einheitsmatrix}$$

Dies ergibt in Tabellenform:

| $v_1$ | $v_2$ | $v_3$ | $x_1$ | $x_2$ | $l_i$ |
|-------|-------|-------|-------|-------|-------|
| -1.0  | 0.0   | 0.0   | 1.0   | 1.0   | 1.0   |
| 0.0   | -1.0  | 0.0   | 1.0   | 2.0   | 2.0   |
| 0.0   | 0.0   | -1.0  | 1.0   | 8.0   | 4.0   |

Das in der Tabelle dargestellte Gleichungssystem

$$- E_E \, v + A_E \, x = l_E \tag{1.1}$$

läßt sich ohne Informationsverlust unterteilen in

$$- E_R \, v + A_R \, x = l_R, \tag{1.2}$$

wobei sich ergibt:

$$-E_E = \begin{pmatrix} -1 & 0 & 0 \\ 0 & -1 & 0 \end{pmatrix} \; ; \; -E_R = (0 \quad 0 \quad -1)$$

$$A_E = \begin{pmatrix} 1 & 1 \\ 1 & 2 \end{pmatrix} \; ; \; I_E = \begin{pmatrix} 1 \\ 2 \end{pmatrix} \; ; \; A_R = (1 \quad 8) \; ; \; I_R = (4) \; ;$$

Es gilt: Wenn u = Anzahl der Parameter x und n = Anzahl der Beobachtungen **1** bezeichnet, werden die Dimensionen der betreffenden Matrizen: $A_E$ = (u, u), $A_R$ = (n-u, u), $I_E$ = (u, 1), $I_R$ = (n-u, 1), $E_E$ = (u, n), $E_R$ = (n-u, n), x = (u, 1).

Aus Gleichung (1.1) ergibt sich:

$$- E_E \; v + A_E \; x = I_E$$

$$\Leftrightarrow A_E \; x = I_E + E_E \; v$$

$$\Leftrightarrow x = A_E^{-1} \; (I_E + E_E \; v) \tag{1.3}$$

Die Einführung von (1.3) in Gleichung (1.2) erbringt:

$$- E_R \; v + A_R \; x = I_R$$

$$\Leftrightarrow - E_R \; v + A_R \; (A_E^{-1} \; (I_E + E_E \; v)) = I_R$$

$$\Leftrightarrow - E_R \; v + A_R \; A_E^{-1} \; I_E + A_R \; A_E^{-1} \; E_E \; v = I_R$$

$$\Leftrightarrow ( A_R \; A_E^{-1} \; E_E - E_R) \; v = (I_R - A_R \; A_E^{-1} \; I_E )$$

$$\Leftrightarrow A_{bed} \; v = I_{bed} \tag{1.4}$$

mit

$$A_{bed} = ( A_R \; A_E^{-1} \; E_E - E_R ) : (n\text{-}u,n) \tag{1.5}$$

und

$$I_{bed} = (I_R - A_R \; A_E^{-1} \; I_E ) : (n\text{-}u,1). \tag{1.6}$$

Der Index $_{bed}$ bezeichnet hierbei die transformierten Matrizen für eine Ausgleichung nach bedingten Beobachtungen.

Diese soll nun in der bekannten Darstellung näher untersucht werden:

$$A_{bed} = B; \qquad I_{bed} = -w; \qquad B \; v + w = o;$$

Aus (WOLF 1994) ist bekannt:

$$B (l + v) + c = o \qquad \text{oder} \qquad B v + w = o, \text{ mit } w = B l + c$$

Führt man für die Beobachtungen Gewichte P ein, so ergeben sich die Bestimmungsgleichungen für die gesuchten Parameter nach der Methode der kleinsten Quadrate zu (WOLF 1994, pp 46):

$$v = - P^{-1} B^T ( B P^{-1} B^T )^{-1} w ;$$

$$Q_{kk} = ( B P^{-1} B^T )^{-1} ;$$

$$v = -P^1 B^T Q_{kk}(B l + c);$$

und die Varianz-Kovarianz-Matrix (**Q)** der ausgeglichenen Beobachtungen ergibt sich zu:

$$(Q) = P^{-1} - P^{-1} B^T Q_{kk} B P^{-1}.$$

Hierbei gilt die bekannte "Probe von ANSERMET": die Summe der Diagonalelemente der Matrix **D**

$$D = E - P^{-1} B^T Q_{kk} B$$

entspricht der Anzahl der Beobachtungen abzüglich der Anzahl der Bedingungsgleichungen. Berechnet wird:

$$B = (A_R A_E^{-1} E_E - E_R) \text{ und } -w = (I_R - A_R A_E^{-1} I_E)$$

$$A_E^{-1} = \begin{pmatrix} 2 & -1 \\ -1 & 1 \end{pmatrix} ; \; A_R A_E^{-1} E_E = ( -6 \quad +7 \quad 0 );$$

$$B = A_R A_E^{-1} E_E - E_R = (-6 +7 -1) ; \; I_R - A_R A_E^{-1} I_E = (-4) = -w$$

Um die numerische Richtigkeit der Modellüberführung "vermittelnd" in "bedingt" sicherzustellen, kann die Gleichung B **l = w** benützt werden, bei der die Beobachtungen **l** aus der vermittelnden Ausgleichung verwendet werden.

$$B\, l = w = ( -6 \quad +7 \quad -1 ) \begin{pmatrix} 1 \\ 2 \\ 4 \end{pmatrix} = ( +4 )$$

Aus der Matrix **B** können nun die Balancierungsfaktoren leicht entnommen werden gemäß:

$$P_{G\,i\,i} = (B_{1i})^2 \qquad\qquad (1.7)$$

**Begründung:** Falls diese Werte als Diagonalelemente der Matrix **P** in die bedingte Ausgleichung eingebracht werden, so erhält die (n,n) Matrix

$$D = E - P^{-1} B^T Q_{kk} B$$

gleich große numerische Werte auf ihrer Hauptdiagonalen.

Im folgenden soll anhand eines in der Zeichnung schematisch dargestellten Ausführungsbeispiels die Bestimmung von räumlichen Koordinaten eines Punktes durch Messung von Schrägstrecken unter Anwendung des erfindungsgemäßen Verfahrens erläutert werden.

Gegeben ist eine Anzahl von Festpunkten bzw. Anschlußpunkten, deren Koordinaten fehlerfrei bekannt sind. Ausgehend von diesen Festpunkten sollen aus Streckenmessungen zu einem koordinatenmäßig unbekannten Punkt (Neupunkt) dessen Koordinaten im System der Anschlußpunkte bestimmt werden. Die Anzahl der gemessenen Strecken soll dabei die Anzahl der zu bestimmenden unbekannten Größen (Koordinaten im Raum und eventuell Maßstabsfaktoren) übersteigen.

Beispielrechnungen für die dreidimensionale Punktbestimmung mittels Schrägstrecken (und eingeschlossenem Maßstabsfaktor) unter Verwendung des Verfahrens der balancierten Beobachtungen bei der Ausgleichsrechnung

Gegeben:

a) Ein Anzahl von Punkten, die in einem einheitlichen kartesischen Koordinatensystem "fehlerfreie" dreidimensionale Koordinaten aufweisen (Festpunkte bzw. Anschlußpunkte).

b) Aus Laufzeitunterschieden, Phasenverschiebungen oder anderen geeigneten Verfahren abgeleitete Streckenmessungen zu einem koordinatenmäßig unbekannten Punkt (Neupunkt).

Gesucht: 3D-Koordinaten des Neupunktes im System der Anschlußpunkte.

Voraussetzungen: Die Anzahl der Strecken soll die Anzahl der zu bestimmenden unbekannten Größen (Koordinaten und eventuell Maßstabsfaktoren) übersteigen. Für die notwendige Ausgleichsrechnung soll das Verfahren der balancierte Beobachtungen angewendet werden.

**Beispielrechnungen:**

I) gegen: vier koordinatenmäßig verschiedene Anschlußpunkte mit Streckenmessung vom Neupunkt aus hierzu (bzw. umgedreht). Den Strecken wird kein (einheitlicher) Maßstabsfaktor zugeschrieben.

Gesucht: die kartesischen Koordinaten x, y, z des Neupunktes.

II) gegeben: fünf kordinantenmäßig verschiedene Anschlußpunkte mit Streckenmessung vom Neupunkt aus hierzu (bzw. umgedreht). Den Strecken wird ein (einheitlicher) Maßstabsfaktor zugeschrieben.

Gesucht: die kartesischen Koordinaten x, y, z des Neupunktes und der Maßstabsfaktor.

III) gegeben: mehr als vier koordinatenmäßig verschiedene Anschlußpunkte mit Streckenmessung vom Neupunkt aus hierzu (bzw. umgedreht). Den Strecken wird kein (einheitlicher) Maßstabsfaktor zugeschrieben.

Gesucht: die kartesischen Koordinaten x, y, z des Neupunktes.

IV) gegeben: mehr als fünf koordinatenmäßig verschiedene Anschlußpunkte mit Streckenmessung vom Neupunkt aus hierzu (bzw. umgedreht). Den Strecken wird ein (einheitlicher) Maßstabsfaktor zugeschrieben.

Gesucht: die kartesischen Koordinaten x, y, z des Neupunktes und der (einheitliche) Maßstabsfaktor für die Strecken.

Für alle Beispielsrechnungen ist zunächst ein Näherungswert für die Unbekannten x, y, z zu ermitteln, der z. B. nach den Verfahren:

K. Rinner: Geometrie mit Raumstrecken. Zeitschrift für Vermessungswesen, S. 91-105, 3/1958

errechnet wird oder anderweitig vorgegeben ist. Andere Verfahren sind zu diesem Zweck ebenfalls in Gebrauch. Danach ist das linearisierte (durch die Einführung von Näherungswerten für die unbekannten Parameter) Ausgleichungsmodell zu erstellen. Betrachtet wird das lineare Modell der Ausgleichungsrechnung nach vermittelnden Beobachtungen

$$A\, x = l + v,\ D\,(l) = E\, \sigma^2$$

wobei n die Anzahl der Zeilen (Beobachtungen) und u die Anzahl der Spalten (Unbekannte) von **A** bezeichnet.

A      (n, u)-Matrix mit rg **A** = u

**x**      (u, 1)-Vektor der zu schätzenden (festen) Parameter

**l**      (n, 1)-Vektor der (reduzierten) Beobachtungen

**v**      (n, 1)-Vektor der Verbesserungen

**D (l)**      (n, n)-Varianz-Kovarianz-Matrix der Beobachtungen a priori

**m$^2$**      Varianz der Gewichtseinheit

**E**      (n, n)-Einheitsmatrix

P      (n, n)-Diagonal-Matrix der Gewichte

Bei Anwendung der Methode der kleinsten Quadrate lauten die Ergebnisse:

1) Ausgeglichene Unbekannte. $x = (\mathbf{A}^T \, \mathbf{P} \, \mathbf{A})^{-1} \, \mathbf{A}^T \, P \, 1$

2) Verbesserungen: $\mathbf{v} = \mathbf{A} \, \mathbf{x} - 1$

3) Varianz der Gewichtseinheit: $m^2 = \mathbf{v}^T \, P \, \mathbf{v} \, /(n-u)$

4) Varianz-Kovarianz-Matrix der ausgeglichenen Unbekannten:
$m^2 \, \mathbf{(A^T \, P \, A)^{-1}}$

5) Varianz-Kovarianz-Matrix der ausgeglichenen Beobachtungen:
$m^2 \, \mathbf{A} \, \mathbf{(A^T \, P \, A)^{-1}} \, \mathbf{A^T}$

6) Teilredundanzen der Beobachtungen: $r_i =$
$\mathbf{(E - A(A^T \, P \, A)^{-1} \, A^T \, P)_{ii}}$

Erhalten die unabhängigen Beobachtungen gleiche Gewichtungen (gleiche Varanzen), so wird P = E. Bei allen Berechnungen sind sogenannte Iterationen praktisch sinnvoll, d.h. die Ausgleichung wird sooft wiederholt, bis die Zuschläge (Absolutwerte) zu den Näherungswerten der Unbekannten (falls linearisiert werden muß, so wie es hier der Fall ist) eine vorgegebene Grenze unterschreiten.

Die Zeilen der Koeffizientenmatrix **A** und des reduzierten Beobachtungsvektors **l** ergeben sich für jede einzelne Strecke (Beobachtung) zu:

Für die Näherung wird die Funktion als Taylor-Entwicklung geschrieben, diese Entwicklung jedoch bereits nach dem linearen Glied

$$\frac{\partial f}{\partial x} \, d \, x$$

abgebrochen. Demgemäß gilt die Anweisung:

Berechne für jede Strecke (mit str = gemessene Strecke)

$$\Delta\_x = x_0 - x_i; \qquad \Delta\_y = y_0 - y_i; \qquad \Delta\_z = z_0 - z_i;$$

$$S = (\Delta\_x^2 + \Delta\_y^2 + \Delta\_z^2)^{1/2}$$

Dann ist

| $A_{i1}$ | $A_{i2}$ | $A_{i3}$ | $l_i$ |
|---|---|---|---|
| $\Delta\_x/S$ | $\Delta\_y/S$ | $\Delta\_z/S$ | str - S |

Für Beispiel II) und IV): Zeilenweise Reihenfolge der Unbekannten in A: dx, dy, dz, dm. Für den ausgeglichenen Maßstabsfaktor gilt dann: Maßstabsfaktor = 1 + dm.

Berechne für jede Strecke (mit str = gemessene Strecke)

$$\Delta\_x = x_0 - x_i; \qquad \Delta\_y = y_o - y_i; \qquad \Delta\_z = z_0 - z_i;$$

$$S = ( \Delta\_x^2 + \Delta\_y^2 + \Delta\_z^2 )^{1/2}$$

Dann ist:

| $A_{i1}$ | $A_{i2}$ | $A_{i3}$ | $A_{i4}$ |
|---|---|---|---|
| $\Delta\_x/S$ | $\Delta\_y/S$ | $\Delta\_z/S$ | $S$ |

Die reduzierte Beobachtung $l_i$ ergibt sich wiederum zu:

$$l_i = str - S$$

Mögliche Gewichte für die (unkorrelierten) Beobachtungen ergeben sich zu:

$$\rho_i = 1.0/m_i^2 \; ; \; m_i^2 = \text{a priori Standardabweichung der gemessenen Strecke}$$

Im Falle der Ausgleichung nach der Methode der kleinsten Quadrate mit balancierten Beobachtungen und a priori Varianzen der (unkorrelierten) Beobachtungen ergit sich die Gewichtsmatrix **P** zu **P** = **P** a priori **P**$_G$, worin **P** a priori die a priori Gewichte bezeichnet und **P**$_G$ die Balancierungsfaktoren.

Beispiel I) Gegeben seien die 4 Anschlußpunkte A, B, C, D mit den 3D kartesischen Koordinaten und dem Näherungswert **N** (in der Dimension Meter)

| | x | y | z |
|---|---|---|---|
| A | 1048.08 | 2000.00 | 2996.12 |
| B | 1018.56 | 2052.92 | 2990.09 |
| C | 0990.57 | 2064.64 | 3000.89 |
| D | 0969.91 | 2027.02 | 3009.62 |
| N | 1000.00 | 2000.00 | 3000.00 |

Als gemessene, gleichgenaue Strecken seien gegeben (in der Dimension Meter)

Von **N** nach A:  48.23
Von **N** nach B:  56.95
Von **N** nach C:  65.33
Von **N** nach D:  41.57

Die Position x, y, z des Neupunktes soll bestimmt werden: Damit ergibt sich **A** zu:

$$\mathbf{A} = \begin{pmatrix} -0.9967596670 & +0.0000000000 & +0.0804373442 \\ -0.3259046552 & -0.9292496956 & +0.1740148240 \\ +0.1443434617 & -0.9894338667 & -0.0136230839 \\ +0.7238460092 & -0.6499939904 & -0.2314190299 \end{pmatrix}$$

und **l** zu:

$$ \mathbf{I} = \begin{pmatrix} -0.0063016824 \\ +0.0008288032 \\ -0.0002885345 \\ +0.0003848947 \end{pmatrix} $$

Zur Durchführung einer Vergleichsrechnung wird in herkömmlicher Berechnungsweise als Matrix **P** die Einheitsmatrix **E** verwendet. Dann ergeben sich für die Ausgleichung nach der Methode der kleinsten Quadrate nach den oben dargelegten Formeln (Ergebnisse nur auszugsweise):

dx = +0.00818 Meter : Neupunkt x = 1000.00818 Meter

dy = +0.00077 Meter : Neupunkt y = 2000.00077 Meter

dz = +0.02272 Meter : Neupunkt z = 3000.02272 Meter

Anstelle der Gewichtsmatrix **P** = **E** wird nunmehr erfindungsgemäß die diagonal besetzte Matrix der Balancierungsfaktoren **P** = **P**$_G$ eingeführt. Analog der am oben dargestellten einfachen numerischen Ausführungsbeispiel erhält man die Werte

$P_1$ = 0.32930854

$P_2$ = 43.77607632

$P_3$ = 100.00000000

$P_4$ = 33.21541146

Entscheidend für die (stets psitiven) Balancierungsfaktoren ist nicht deren absolute Größe, sondern ihre Verhältnisse zueinander.

Mit den Balancierungsfaktoren ergeben sich dann die nachstehenden ausgeglichenen Koordinaten:

dx = +0.01206 Meter : Neupunkt x = 1000.01206 Meter

dy = +0.00142 Meter : Neupunkt y = 2000.00142 Meter

dz = +0.03340 Meter : Neupunkt z = 3000.03340 Meter

Es ist erkennbar, daß mit dem erfindungsgemäßen Meßverfahren deutliche Abweichungen zu der bisher als statistisch / Methode der kleinsten Quadrate angesehenen Neupunktbestimmung entstehen.

Beispiel II) Gegeben seien die 5 Anschlußpunkte A, B, C, D, E mit den 3D kartesischen Koordinaten und dem Näherungswert **N** (in der Dimension Meter)

|   | x | y | z |
|---|---|---|---|
| A | 1048.08 | 2000.00 | 2996.12 |

**16**

(fortgesetzt)

|   | x | y | z |
|---|---|---|---|
| B | 1018.56 | 2052.92 | 2990.09 |
| C | 0990.57 | 2064.64 | 3000.89 |
| D | 0969.91 | 2027.02 | 3009.62 |
| E | 0964.72 | 1995.73 | 2992.56 |
| N | 1000.00 | 2000.00 | 3000.00 |

Als gemessene, gleichgenaue Strecken seien gegeben (in der Dimension Meter)

Von **N** nach A:    48.23
Von **N** nach B:    56.95
Von **N** nach C:    65.33
Von **N** nach D:    41.57
Von **N** nach E:    36.29

Zusätzlich zur Neupunktposition soll der (einheitliche) Maßstabsfaktor für die Strecken bestimmt werden. Damit ergbit sich **A** zu:

$$
A = \begin{pmatrix}
-0.9967596670 & +0.0000000000 & +0.0804373442 & 48.2363016842 \\
-0.3259046552 & -0.9292496956 & +0.1740148240 & 56.9491711968 \\
+0.1443434617 & -0.9894338667 & -0.0136230839 & 65.3302885345 \\
+0.7238460092 & -0.6499939904 & -0.2314190299 & 41.5696151053 \\
+0.9716888786 & +0.1176052016 & +0.2049139812 & 36.3079178692
\end{pmatrix}
$$

und 1 zu:

$$
l = \begin{pmatrix}
-0.0063016824 \\
+0.0008288032 \\
-0.0002885345 \\
+0.0003848947 \\
-0.0179178692
\end{pmatrix}
$$

Für Vergleichszwecke wird wieder zunächst Matrix **P** als Einheitsmatrix E eingesetzt. Dann ergeben sich für die Ausgleichung nach der Methode der kleinsten Quadrate nach den oben dargelegten Formeln (Ergebnisse nur auszugsweise):

dx = -0.00538 Meter : Neupunkt x = 0999.99462 Meter

dy = -0.04192 Meter : Neupunkt y = 1999.98508 Meter

dz = -0.01490 Meter : Neupunkt z = 2999.98510 Meter

Der Maßstabsfaktor ergibt sich zu: 1.0 + (-0.0002172654) = 0.9997827346

Anstelle der Gewichtsmatrix **P** = E wird jetzt die diagonal besetzte Matrix der Balancierungsfaktoren **P** = **P**$_G$ eingeführt. Man erhält die Werte:

$$P_1 = 0.49526728$$

$$P_2 = 43.22320180$$

$$P_3 = 100.00000000$$

$$P_4 = 34.04826915$$

$$P_5 = 0.00431718$$

Deren Bestimmung kann (wie bei Beispiel I) prinzipiell Anlage 2 entnommen werden.

$$dx = -0.01151 \text{ Meter : Neupunkt } x = 0999.98849 \text{ Meter}$$

$$dy = -0.02379 \text{ Meter : Neupunkt } y = 1999.97621 \text{ Meter}$$

$$dz = -0.03198 \text{ Meter : Neupunkt } z = 2999.96802 \text{ Meter}$$

Der Maßstabsfaktor ergibt sich zu: 1.0 + (-0.00034442) = 0.999655580

**Beispiel III)** Gegeben seien die 7 Anschlußpunkte A,B,C,D,E mit den 3D kartesischen Koordinaten und dem Näherungswert **N** (in der Dimension Meter)

|   | x | y | z |
|---|---|---|---|
| A | 1048.08 | 2000.00 | 2996.12 |
| B | 1018.56 | 2052.92 | 2990.09 |
| C | 0990.57 | 2064.64 | 3000.89 |
| D | 0969.91 | 2027.02 | 3009.62 |
| E | 0964.72 | 1995.73 | 2992.56 |
| F | 1004.56 | 1972.42 | 2988.35 |
| G | 1022.15 | 1888.25 | 2902.03 |
| N | 1000.00 | 2000.00 | 3000.00 |

Als gemessene Strecken seien gegeben (in der Dimension Meter)

Von N nach A :     48.23
Von N nach B :     56.95
Von N nach C :     65.33
Von N nach D :     41.57
Von N nach E :     36.29
Von N nach F :     30.27
Von N nach G :     150.25

Die Position des Neupunktes x,y,z (ohne Maßstabsfaktor für die Strecken) soll bestimmt werden. Damit ergibt sich **A** zu:

$$A = \begin{pmatrix} -0.9967596670 & +0.0000000000 & +0.0804373442 \\ -0.3259046552 & -0.9292496956 & +0.1740148240 \\ +0.1443434617 & -0.9894338667 & -0.0136230839 \\ +0.7238460092 & -0.6499939904 & -0.2314190299 \\ +0.9716888786 & +0.1176052016 & +0.2049139812 \\ -0.1505703051 & +0.9106861873 & +0.3846807136 \\ -0.1474152730 & +0.7437316819 & +0.6520214127 \end{pmatrix}$$

und **l** zu:

$$l = \begin{pmatrix} -0.0063016824 \\ +0.0008288032 \\ -0.0002885345 \\ +0.0003848947 \\ -0.0179178692 \\ -0.0148559514 \\ -0.0058015519 \end{pmatrix}$$

Wird wieder für die Matrix **P** die Einheitsmatrix **E** eingesetzt, ergeben sich für die Ausgleichung nach der Methode der kleinsten Quadrate nach den oben dargelegten Formeln (Ergebnisse nur auszugsweise):

dx = -0.00526 Meter : Neupunkt x = 0999.99474 Meter

dy = -0.00181 Meter : Neupunkt y = 1999.99819 Meter

dz = -0.01904 Meter : Neupunkt z = 2999.98096 Meter

Anstelle der Gewichtsmatrix **P** = **E** wird jetzt die diagonal besetzte Matrix der Balancierungsfaktoren **P** = $P_G$ eingeführt. Man erhält die Werte:

$P_1$ = 60.82737820

$P_2$ = 23.71970288

$P_3$ = 43.52046846

$P_4$ = 100.00000000

$$P_5 = 43.00036926$$

$$P_6 = 76.89860484$$

$$P_7 = 28.34763583$$

Deren Bestimmung kann Anlage 3 und Anlage 4 entnommen werden.

dx = -0.00471 Meter : Neupunkt x = 0999.99529 Meter

dy = -0.00126 Meter : Neupunkt y = 1999.99874 Meter

dz = -0.02445 Meter Neupunkt z = 2999.97555 Meter

**Beispiel IV)** Gegeben seien die 7 Anschlußpunkte A,B,C,D,E mit den 3D kartesischen Koordinaten und dem Näherungswert N (in der Dimension Meter)

|   | x | y | z |
|---|---|---|---|
| A | 1048.08 | 2000.00 | 2996.12 |
| B | 1018.56 | 2052.92 | 2990.09 |
| C | 0990.57 | 2064.64 | 3000.89 |
| D | 0969.91 | 2027.02 | 3009.62 |
| E | 0964.72 | 1995.73 | 2992.56 |
| F | 1004.56 | 1972.42 | 2988.35 |
| G | 1022.15 | 1888.25 | 2902.03 |
| N | 1000.00 | 2000.00 | 3000.00 |

Als gemessene Strecken seien gegeben (in der Dimension Meter)

Von N nach A :  48.23
Von N nach B :  56.95
Von N nach C :  65.33
Von N nach D :  41.57
Von N nach E :  36.29
Von N nach F :  30.27
Von N nach G :  150.25

Die Position des Neupunktes x,y,z mit einheitlichem Maßstabsfaktor für die Strecken soll bestimmt werden. Damit ergibt sich **A** zu:

$$\mathbf{A} = \begin{pmatrix} -0.9967596670 & +0.0000000000 & +0.0804373442 & 48.2363016824 \\ -0.3259046552 & -0.9292496956 & +0.1740148240 & 56.9491711968 \\ +0.1443434617 & -0.9894338667 & -0.0136230839 & 65.3302885345 \\ +0.7238460092 & -0.6499939904 & -0.2314190299 & 41.5696151053 \\ +0.9716888786 & +0.1176052016 & +0.2049139812 & 36.3079178692 \\ -0.1505703051 & +0.9106861873 & +0.3846807136 & 30.2848559514 \\ -0.1474152730 & +0.7437316819 & +0.6520214127 & 150.2558015519 \end{pmatrix}$$

und **l** zu:

$$\mathbf{l} = \begin{pmatrix} -0.0063016824 \\ +0.0008288032 \\ -0.0002885345 \\ +0.0003848947 \\ -0.0179178692 \\ -0.0148559514 \\ -0.0058015519 \end{pmatrix}$$

Wird wieder die Einheitsmatrix **E** als Marix **P** verwendet, ergeben sich für die Ausgleichung nach der Methode der kleinsten Quadrate nach den oben dargelegten Formeln (Ergebnisse nur auszugsweise):

$$dx = -0.00522 \text{ Meter : Neupunkt x} = 0999.99478 \text{ Meter}$$

$$dy = -0.00211 \text{ Meter : Neupunkt y} = 1999.99789 \text{ Meter}$$

$$dz = -0.01773 \text{ Meter : Neupunkt z} = 2999.98227 \text{ Meter}$$

Der Maßstabsfaktor ergibt sich zu: 1.0 + (-0.0000054153) = 0.9999560175

Anstelle der Gewichtsmatrix **P** = **E** wird jetzt die diagonal besetzte Matrix der Balancierungsfaktoren **P** = **P**$_G$ eingeführt. Man erhält die Werte:

$$P_1 = 47.74810724$$

$$P_2 = 19.81317749$$

$$P_3 = 63.32206820$$

$$P_4 = 25.26013124$$

$$P_5 = 55.77745415$$

$$P_6 = 100.00000000$$

$$P_7 = 25.70049162$$

Deren Bestimmung kann Anlage 3 und Anlage 4 entnommen werden.

$$dx = -0.00549 \text{ Meter} : \text{Neupunkt } x = 0999.99451 \text{ Meter}$$

$$dy = -0.00276 \text{ Meter} : \text{Neupunkt } y = 1999.99724 \text{ Meter}$$

$$dz = -0.02395 \text{ Meter} : \text{Neupunkt } z = 2999.97605 \text{ Meter}$$

Der Maßstabsfaktor ergibt sich zu: 1.0 + (-0.00001605) = 0.99998395

Es ist ohne weiteres ersichtlich, daß die durch das erfindungsgemäße Meßverfahren erhaltenen Meßwerte zu einem anderen Steuerungsverhalten von Handhabungsgeräten führen als dies bisher erreicht worden ist.

Ebenso gelingt die photogrammetrische Vermessung mit einer wesentlich verbesserten und modellgemäß realistischeren Genauigkeit an die Realität.

**Patentansprüche**

1. Verfahren zur Ausgleichung von durch überbestimmte, in einer Matrix **A** zusammengefaßte Koeffizienten von Bestimmungsgleichungen definierten Systemen, nämlich zur Bestimmung eines Meßwerts aus einer solchen Vielzahl von Messungen, die die Anzahl der zu bestimmenden Unbekannten des Meßwerts überschreitet, oder zur Bestimmung einer definierten statischen Verteilung eines über Knoten miteinander verknüpften Strekkennetzes, insbesondere Stabtragwerks, mit folgenden Verfahrensschritten:

   a) Die Bestimmungsgleichungen werden auf paarweise lineare Abhängigkeiten voneinander untersucht,

   b) Das Maß der Überbestimmung (Nettofreiheitsgrad) wird unter Berücksichtigung des Rangdefekts r, der Matrix **A,** der Anzahl der zu bestimmenden Unbekannten u und der Anzahl n der Bestimmungsgleichungen unter Berücksichtigung von festgestellten paarweisen linearen Abhängigkeiten festgestellt,

   c) Feststellung von Totalredundanzen und nicht überbestimmten Bedingungsgleichungen (Nichtredundanzen),

   d) Erkennung von etwaigen latenten und verkettet latenten Bedingungen,

   e) Durchführung einer balancierten Ausgleichung in dem linearen Modell **A x** = **l** + **v**, wobei **l** einen (n, 1) Vektor von Beobachtungen und v einen (n, 1) Vektor zufälliger Fehler bezeichnet, durch Vereinheitlichung der Werte der Hauptdiagonalen der Matrix

   $$B = [A(A^T P_G A)^{-1} A^T P_G]$$

   mit **P**$_G$ als Matrix der Balancierungsfaktoren nach Festlegung des Balancierungsziels unter Berücksichtigung etwaiger festgestellter paarweiser linearen Abhängigkeiten, des Netto-Freiheitsgrades, etwaiger Total- oder Nichtredundanzen und etwaiger latenter oder verkettet latenter Bedingungen.

2. Verfahren nach Anspruch 1 mit einer Feststellung und ggfs. Separierung von voneinander unabhängigen Ausgleichungsproblemen vor dem Verfahrensschritt a).

3. Verfahren nach Anspruch 1 oder 2, bei dem für den Fall n = u + 1 in dem linearen Modell

$$A x = 1 + v,$$

wobei **v** durch übliche Ausgleichskriterien ermittelt wird, die

$$-E v + A x = 1$$

gewählt wird, um dieser Darstellung reduzierte Matrizen, deren Zeilenzahl der Anzahl der Unbekannten entspricht, und Restmatrizen (Teilmatrizen) zu bilden und unter Verwendung der Teilmatrizen Balancierungsfaktoren zur Korrektur der nach herkömmlichen Ausgleichungsrechnungen ermittelten Meßwerte zu ermitteln, um ungewollte unterschiedliche Gewichtungen der Meßwerte zu eliminieren.

4. Verfahren nach einem der Ansprüche 1 bis 3, bei dem als übliches Ausgleichungskriterium die Methode der kleinsten Quadratsumme verwertet wird.

5. Verfahren nach einem der Ansprüche 1 bis 4 als Teil eines Steuerungsverfahrens zur Steuerung der Position von Stellgliedern von Handhabungsautomaten.

6. Verfahren nach einem der Ansprüche 1 bis 4 zur Bestimmung von Ortskoordinaten von photogrammetrischer Auswertung mehrerer Ansichten von Gegenständen aus mehreren Blickwinkeln.

7. Streckennetz, insbesondere Stabtragwerk, bestehend aus einer Vielzahl von Strecken, die über Knoten miteinander verbunden sind, in dem die Belastungskapazität der Strecken nach dem Verfahren nach einem der Ansprüche 1 bis 4 zur gleichmäßigen Verteilung der Belastung auf alle Knoten dimensioniert ist.

**Claims**

1. Method for compensating systems defined by overdetermined coefficients, combined in a matrix **A**, of conditional equations, specifically for determining a measured value from a multiplicity of measurements which is such as to exceed the number of the unknowns of the measured value that are to be determined, or for determining a defined static distribution of a finite lengths network interlinked via nodes, in particular a supporting rod structure, having the following method steps:

   a) the conditional equations are examined for pairwise linear dependencies on one another,

   b) the measure of the overdetermination (net degree of freedom) is established by taking account of the rank defect r, the matrix **A**, the number of the unknowns u to be determined, and the number n of the conditional equations, taking account of established pairwise linear dependencies,

   c) establishing total redundancies and non-overdetermined conditional equations (non-redundancies),

   d) detecting any latent and concatenatedly latent conditions,

   e) carrying out a balanced compensation in the linear model **A x = 1 + v, 1** denoting an (n, 1) vector of observations and **v** denoting an (n, 1) vector of random errors, by standardizing the values of the main diagonals of the matrix

$$B = [A (A^T P_G A)^{-1} A^T P_G],$$

   with **P_G** as matrix of the balancing factors, after establishing the balancing aim, taking account of any established pairwise linear dependencies, of the net degree of freedom, of any total redundancies or non-redundancies, and of any latent or concatenatedly latent conditions.

2. Method according to Claim 1 with establishment and, if appropriate, separation of mutually independent compensation problems before method step a).

3. Method according to Claim 1 or 2, in which

$$-E \, v + A \, x = 1$$

is selected for the case n = u + 1 in the linear model

$$A \, x = 1 + v,$$

**v** being determined by conventional compensation criteria, in order to form matrices which are reduced by this representation and whose number of rows corresponds to the number of unknowns, and to form residual matrices (submatrices), and in order, by using the submatrices, to determine balancing factors for correcting the measured values determined using conventional compensation calculations, so as to eliminate undesired different weightings of the measured values.

4. Method according to one of Claims 1 to 3, in which the method of the least sum of squares is used as the conventional compensation criterion.

5. Method according to one of Claims 1 to 4 as part of a control method for controlling the position of actuators of handling automatons.

6. Method according to one of Claims 1 to 4 for determining spatial coordinates from photogrammetric evaluation of a plurality of views of objects from a plurality of viewing angles.

7. Finite lengths network, in particular a supporting rod structure, comprising a multiplicity of finite lengths which are interconnected via nodes, in which network the loading capacity of the finite lengths is dimensioned using a method according to one of Claims 1 to 4 for the purpose of uniformly distributing the load over all nodes.

**Revendications**

1. Procédé pour compenser des systèmes définis par des coefficients surdéterminés d'équations de détermination, rassemblés dans une matrice **A**, à savoir pour déterminer une valeur de mesure à partir d'un nombre de mesures plus grand que celui des inconnues à déterminer de la valeur de mesure, ou pour déterminer une répartition statique définie d'une ossature, en particulier structure porteuse à barres, reliée en des noeuds, comprenant les étapes de procédé suivantes :

a) Les équations de détermination sont étudiées à l'égard de leur dépendance linéaire mutuelle par paires ;
b) On établit la mesure de la surdétermination (degré de liberté net) en tenant compte du défaut de rang r, de la matrice A, du nombre des inconnues à déterminer et du nombre n des équations de détermination en tenant compte des dépendances linéaires par paires établies ;
c) On établit les redondances totales et les équations de détermination non surdéterminées (non-redondances) ;
d) On détecte les éventuelles conditions latentes et latentes à enchaînement ;
e) On effectue une compensation équilibrée dans le modèle linéaire **Ax=l+v,** dans lequel **1** désigne un vecteur (n, 1) d'observations et **v** un vecteur (n, 1) d'erreurs aléatoires, par normalisation des valeurs des diagonales principales de la matrice

$$B = [A(A^T P_G A)^{-1} A^T P_G]$$

avec **P**$_G$ comme matrice des facteurs d'équilibrage après avoir arrêté l'objectif de l'équilibrage en tenant compte des dépendances linéaires par paires éventuellement établies, du degré de liberté net, d'éventuelles redondances totales ou non-redondances et d'éventuelles conditions latentes ou latentes à enchaînement.

2. Procédé selon la revendication 1, dans lequel on repère et le cas échéant on sépare des problèmes de compensation mutuellement indépendants avant l'étape de procédé a).

3. Procédé selon la revendication 1, dans lequel pour le cas où n=u+1 dans le modèle linéaire :

$$Ax=l+v,$$

où v est obtenu par des critères de compensation usuels, on choisit :

$$-Ev+Ax=1$$

pour construire des matrices réduites à la représentation dont le nombre de lignes correspond au nombre des inconnues, et des matrices de reste, (matrices partielles), et pour obtenir en utilisant les matrices de reste des facteurs d'équilibrage pour corriger les valeurs de mesure obtenues par des calculs de compensation classiques, pour éliminer des pondérations différentes involontaires des valeurs de mesures.

4. Procédé selon l'une des revendications 1 à 3, dans lequel on exploite comme critère de compensation classique la méthode de la moindre somme des carrés.

5. Procédé selon l'une des revendications 1 à 4, faisant partie d'un procédé de commande pour commander la position d'organes de positionnement d'automates de manipulation.

6. Procédé selon l'une des revendications 1 à 4, pour déterminer les coordonnées spatiales d'évaluation photogrammétrique de plusieurs vues d'objets à partir de plusieurs angles de vue.

7. Ossature, en particulier structure porteuse à barres, constituée de plusieurs segments reliés entre eux par des noeuds, dans laquelle la capacité de chargement des segments a été dimensionnée d'après le procédé selon l'une des revendications 1 à 4 pour la répartition régulière de la charge sur tous les noeuds.